# EUROPÄISCHE PATENTSCHRIFT

(11) **EP 1 598 253 B1**
(45) Veröffentlichungstag und Bekanntmachung des Hinweises auf die Patenterteilung: **30.08.2006**
(21) Anmeldenummer: 05009606.4
(22) Anmeldetag: 02.05.2005
(51) Int. Cl.: B60T 13/74, F16D 65/14

(54) **Elektromechanischer Bremsdruckerzeuger für eine Kraftfahrzeugbremsanlage und Kraftfahrzeugbremsanlage die damit ausgerüstet ist**
Electromechanical brake force generator for a vehicle brake system and vehicle brake system provided with the same
Générateur électroméchanique de force de freinage pour un système de freinage de véhicule et véhicule avec un tel générateur

(30) Priorität: 17.05.2004 DE 102004024404
(43) Veröffentlichungstag der Anmeldung: 23.11.2005
(73) Patentinhaber: Lucas Automotive GmbH, 56070 Koblenz (DE)
(72) Erfinder: Giering, Wilfried, 56743 Mendig (DE); Ohlig, Benedikt, 56179 Vallendar (DE)
(74) Vertreter: Thum, Bernhard

(56) Entgegenhaltungen:
- DE-A1- 3 031 643
- DE-A1- 10 255 198
- US-A- 2 338 974
- US-A- 4 653 815
- US-A- 4 918 921

## Beschreibung

Die vorliegende Erfindung betrifft einen elektromechanischen Bremsdruckerzeuger für eine Kraftfahrzeugbremsanlage mit einem Krafteingangsglied, das mit einem Bremspedal gekoppelt ist, einem Gehäuse und einem in dem Gehäuse verlagerbaren Druckkolben, wobei der Druckkolben mit dem Gehäuse eine Druckkammer zur Erzeugung eines hydraulischen Bremsdrucks einschließt, und einer Gewindespindel-Gewindemutter-Anordnung, deren eine Komponente zur Verlagerung des Druckkolbens relativ zu dem Gehäuse verlagerbar ist und deren andere Komponente in dem Gehäuse drehantreibbar ist, wobei die mit dem Druckkolben zusammenwirkende Komponente der Gewindespindel-Gewindemutter-Anordnung zur Verlagerung des Druckkolbens nach Maßgabe einer Verlagerung des Krafteingangsglieds durch Drehantreiben der drehantreibbaren Komponente der Gewindespindel-Gewindemutter-Anordnung zur Erzeugung eines hydraulischen Bremsdrucks in der Druckkammer verlagerbar ist.

Ein derartiger elektromechanischer Bremskrafterzeuger ist beispielsweise aus der US 4,918,921 bekannt. Bei diesem Bremskrafterzeuger wird nach Maßgabe einer Betätigung eines Bremspedals ein Elektromotor angesteuert. Der Rotor des Elektromotors ist dabei mit der Gewindemutter eines Kugelgewindetriebs drehfest gekoppelt. Die Gewindespindel des Kugelgewindetriebs ist in der Gewindemutter aufgenommen und in dem Gehäuse verdrehgesichert, jedoch bei einer Drehung der Gewindemutter translatorisch verlagerbar. Dadurch ist es möglich, einen Bremskolben zur Erzeugung eines Bremsdrucks innerhalb des Gehäuses durch eine translatorische Verlagerung der Gewindespindel zu verlagern. Bei der aus diesem Stand der Technik bekannten Anordnung ist die Spindel in eine endseitige Öffnung des Druckkolbens eingeführt und liegt in dieser satt an. Dies bedeutet, dass es aufgrund eines in der Gewindespindel-Gewindemutter-Anordnung vorhandenen Spiels bei einer Aktivierung des Elektromotors zunächst zu keiner Verlagerung der Gewindespindel kommt, dann jedoch - sobald das Spiel aufgebraucht ist - zu einer abrupten Verlagerung der Gewindespindel und des mit dieser unmittelbar gekoppelten Druckkolbens kommt. Dies kann zu einer unerwünschten Stoßbelastung im gesamten System führen, die zum Einen eine für den Fahrer ungewohnte abrupte Bremswirkung zur Folge hat und zum Anderen unerwünschte Verschleißeffekte in der Gewindespindel-Gewindemutter-Anordnung nach sich ziehen kann.

Eine ähnliche Anordnung ist aus der US 4,653,815 bekannt. Bei diesem Bremskrafterzeuger wird die Gewindemutter über eine Außenverzahnung vermittels eines Elektromotors rotatorisch angetrieben. Die Gewindespindel ist wiederum unmittelbar mit dem Druckkolben gekoppelt. Auch bei dieser Anordnung kommt es in Folge einer Aktivierung des Elektromotors und eines Drehantriebs der Gewindemutter zunächst zu einem Aufbrauchen des systeminhärenten Spiels. Nachdem das Spiel aufgebraucht ist, kommt es wieder zu einer Stoßbelastung in dem System, die zu einer abrupten Verlagerung des Druckkolbens einerseits und zu unerwünschten Verschleißeffekten an der Gewindespindel-Gewindemutter-Anordnung andererseits führt.

Aus der DE 102 55 198 A1 ist ein elektromechanischer Bremsdruckerzeuger bekannt, bei dem die Spindelmutter verdrehgesichert in dem Gehäuse aufgenommen ist und durch ein motorisch ausgelöstes Drehantreiben der Gewindespindel relativ zu dem Gehäuse verlagert wird. Der Bremsdruckkolben ist bei diesem Stand der Technik unmittelbar mit der translatorisch verlagerbaren Gewindemutter gekoppelt. Auch bei dieser Anordnung kommt es zu den vorstehend angesprochenen abrupten Stoßbelastungen in Folge einer Aktivierung des Elektromotors und den damit verbundenen negativen Folgen einer Erhöhung des Verschleißes und einer für den Fahrer ungewohnten abrupten Einleitung des Bremsvorgangs.

Schließlich ist aus der DE 30 31 643 C2 ein elektromechanischer Bremsdruckerzeuger bekannt, bei dem die Abstützung mittels einer Kupplungsanordnung erfolgt.

Es ist demgegenüber eine Aufgabe der vorliegenden Erfindung, einen elektromechanischen Bremsdruckerzeuger der eingangs bezeichneten Art bereitzustellen, bei dem eine abrupte Verlagerung des Druckkolbens und daraus resultierende Stoßbelastungen unterbunden werden.

Diese Aufgabe wird durch einen elektromechanischen Bremsdruckerzeuger mit den Merkmalen des Oberbegriffs des Anspruchs 1 gelöst, bei dem die mit den Druckkolben zusammenwirkende Komponente der Gewindespindel-Gewindemutter-Anordnung und der Druckkolben erst nach Überwindung eines Kopplungsspiels gegen die Wirkung einer Federkraft unmittelbar miteinander kraftübertragend koppelbar sind.

Durch die erfindungsgemäße Maßnahme kann erreicht werden, dass eine Verlagerung der mit dem Druckkolben zusammenwirkenden Komponente der Gewindespindel-Gewindemutter-Anordnung mit kontinuierlich ansteigender Intensität unter Vermeidung von Stoßbelastungen auf den Druckkolben übertragen wird und somit die eingangs mit Bezug auf den Stand der Technik geschilderten Nachteile verhindert werden können. Insbesondere wird zunächst das Kopplungsspiel gegen die Wirkung der Federkraft überwunden, wobei sanft ansteigend die mit dem Druckkolben zusammenwirkende Komponente der Gewindespindel-Gewindemutter-Anordnung mit zunehmender Federkraft den Druckkolben verlagert. Erst wenn das Kopplungsspiel ganz aufgebraucht ist, erfolgt eine direkte Übertragung der Bewegung auf den Druckkolben.

Wenn im Rahmen der Beschreibung und der Patentansprüche zu der vorliegenden Erfindung von einem "Bremsdruckerzeuger" die Rede ist, so soll dieser Ausdruck sowohl eine Anordnung, bei der über ein Bremspedal, einen Bremskraftverstärker und einen daran angeschlossenen Hauptbremszylinder ein Fluiddruck in der Druckkammer erzeugt wird, als auch eine Anordnung umfassen, bei der eine Bremspedalbetätigung erfasst wird und nach deren Maßgabe dann ohne direktes Ausnützen der auf das Bremspedal ausgeübten Pedalbetätigungskraft ein Fluiddruck in der Druckkammer erzeugt wird. Ferner soll der Ausdruck "Bremsdruckerzeuger" auch solche Anordnungen umfassen, die die auf das Bremspedal ausgeübte Pedalbetätigungskraft nur teilweise oder nur in bestimmten (Not-) Betriebssituationen ausnützen.

Eine Weiterbildung der Erfindung sieht vor, dass zwischen der mit dem Druckkolben zusammenwirkenden Komponente der Gewindespindel-Gewindemutter-Anordnung und dem Druckkolben eine Federanordnung vorgesehen ist, wobei das Kopplungsspiel gegen die Federkraft der Federanordnung überwindbar ist. Vorzugsweise ist hierbei vorgesehen, dass die Federanordnung ein Tellerfederpaket umfasst. Alternativ können aber auch andersartige Federanordnungen eingesetzt werden, wie beispielsweise Schraubendruckfedern oder elastomere Federelemente, insbesondere aus Hartgummimaterial.

Gemäß einer Ausführungsvariante der Erfindung ist vorgesehen, dass die mit dem Druckkolben zusammenwirkende Komponente der Gewindespindel-Gewindemutter-Anordnung mit einer Anschlagschulter ausgebildet ist, die nach Überwindung des Kopplungspiels in kraftübertragende Anlage mit dem Druckkolben oder einem mit dem Druckkolben kraftübertragend gekoppelten Bauelement tritt. Durch diese Maßnahme lässt sich auf einfache Weise das Kopplungsspiel bereitstellen.

Eine Weiterbildung des erfindungsgemäßen Bremsdruckerzeugers sieht vor, dass die mit dem Druckkolben zusammenwirkende Komponente der Gewindespindel-Gewindemutter-Anordnung von der Gewindespindel gebildet ist.

Wie eingangs bereits angedeutet, ist es erfindungsgemäß möglich, dass die auf das Krafteingangsglied über das Bremspedal ausgeübte Pedalbetätigungskraft direkt in den Druckkolben eingeleitet wird. Die Gewindespindel-Gewindemutter-Anordnung wirkt bei einer derartigen Anordnung dann als Bremskraftunterstützung und verstärkt die auf das Bremspedal ausgeübte Pedalbetätigungskraft. Bei einer derartigen Ausführungsvariante sieht eine Weiterbildung der Erfindung vor, dass das Krafteingangsglied zur Verlagerung des Druckkolbens mit diesem gekoppelt oder koppelbar ist.

Erfindungsgemäß kann ferner vorgesehen sein, dass in der Übertragungsstrecke zwischen Krafteingangsglied und Druckkolben ein Pufferspiel vorgesehen ist, wobei das Krafteingangsglied und der Druckkolben erst nach Überwindung des Pufferspiels direkt miteinander kraftübertragend koppelbar sind. Diese Maßnahme ist insbesondere deshalb erforderlich, weil es bei einer sehr schnellen Betätigung des Bremspedals unter Umständen dazu kommen kann, dass der Drehantrieb der Gewindespindel-Gewindemutter-Anordnung nicht schnell genug reagiert, so dass eine durch die Gewindespindel-Gewindemutter-Anordnung und dem dieser zugeordneten Drehantrieb im Normalbetriebsfall zur Verfügung stehende und von dem Fahrer erwartete Bremskrafterzeugung ausbleibt. Der Fahrer hat dann den Eindruck, dass er gegen einen ungewohnt starken Widerstand tritt. Dieser Eindruck kann soweit führen, dass der Fahrer das ungewohnte Verhalten der Kraftfahrzeugbremsanlage als Versagen deutet. Durch die vorstehend genannte Maßnahme der Bereitstellung eines Pufferspiels kann dies verhindert werden. In der Folge wird bei einer sehr schnellen Betätigung des Bremspedals zunächst das Pufferspiel überwunden. Selbst bei einer sehr schnellen Betätigung des Bremspedals ist aber der Zeitraum, in dem das Pufferspiel überwunden wird, ausreichend lang, so dass über den Drehantrieb und die Gewindespindel-Gewindemutter-Anordnung eine Bremskrafterzeugung stattfindet und der Fahrer somit das ihm vertraute Verhalten der Kraftfahrzeugbremsanlage spürt.

Gemäß einer Weiterbildung dieser erfindungsgemäßen Ausführungsform ist ferner vorgesehen, dass dem Pufferspiel eine Pufferfederanordnung zugeordnet ist, wobei das Pufferspiel gegen die Federkraft der Pufferfederanordnung überwindbar ist. Auch für die Pufferfederanordnung können Tellerfederpakete, Schraubendruckfedern, oder elastomere Körper eingesetzt werden.

Eine Weiterbildung der Erfindung sieht vor, dass das Krafteingangsglied und der Druckkolben über einen Übertragungskolben miteinander koppelbar sind. Diese Maßnahme eröffnet verschiedene Möglichkeiten zur Anordnung des Pufferspiels und ggf. der Pufferfederanordnung. So ist es gemäß einer Ausführungsvariante möglich, dass das Pufferspiel und die Pufferfederanordnung zwischen dem Krafteingangsglied und dem Übertragungskolben angeordnet ist. Dies bedeutet, dass bereits der Übertragungskolben verzögert verlagert wird und diese verzögerte Verlagerung dann auf den Druckkolben überträgt. Alternativ hierzu kann jedoch auch vorgesehen sein, dass das Pufferspiel und die Pufferfederanordnung zwischen dem Übertragungskolben und dem Druckkolben angeordnet ist. Dies bedeutet, dass der Übertragungskolben im Wesentlichen starr mit dem Krafteingangsglied gekoppelt ist und dass die Betätigungskraft verzögert auf den Druckkolben übertragen wird.

Hinsichtlich der Gewindespindel-Gewindemutter-Anordnung sieht eine Weiterbildung der Erfindung vor, dass die mit dem Druckkolben zusammenwirkende Komponente der Gewindespindel-Gewindemutter-Anordnung verdrehgesichert relativ zu dem Gehäuse geführt ist und dass zur Ausbildung der Verdrehsicherung ein Bereich der mit dem Druckkolben zusammenwirkenden Komponente der Gewindespindel-Gewindemutter-Anordnung mit einem zylindrischen Führungsprofil versehen ist, das mit einem relativ zu dem Gehäuse festgelegten Komplementärprofil zusammenwirkt, wobei die Grundfläche des Führungsprofils eine derartige Form besitzt, dass sich die translatorisch geführte Komponente der Gewindespindel-Gewindemutter-Anordnung bei über den Umfang des zylindrischen Führungsprofils gleichmäßig verteilter Übertragung von Stützkräften an dem Komplementärprofil abstützt. Dadurch lässt sich eine reibungsarme und verschleißarme Führung der Gewindespindel relativ zu dem Gehäuse realisieren. Vorzugsweise ist das Führungsprofil dabei mit einer polygonalen Grundfläche versehen.

Die Erfindung betrifft ferner eine Kraftfahrzeugbremsanlage mit einem elektromechanischen Bremsdruckerzeuger der vorstehend beschriebenen Art.

Die Erfindung wird im Folgenden anhand der beiliegenden Figuren beispielhaft erläutert. Es stellen dar:
- Fig.1: eine Längsschnittteilansicht eines ersten Ausführungsbeispiels des erfindungsgemäßen Bremsdruckerzeugers;
- Fig.2: eine vergrößerte Darstellung des in Fig. 1 mit II gekennzeichneten Bereichs des erfindungsgemäßen Bremsdruckerzeugers;
- Fig.3: eine Längsschnittteilansicht eines zweiten Ausführungsbeispiels des erfindungsgemäßen Bremsdruckerzeugers;
- Fig.4: eine vergrößerte Darstellung des in Fig. 3 mit IV gekennzeichneten Bereichs des erfindungsgemäßen Bremsdruckerzeugers;
- Fig.5: eine Längsschnittteilansicht eines dritten Ausführungsbeispiels des erfindungsgemäßen Bremsdruckerzeugers;
- Fig.6: eine vergrößerte Darstellung des in Fig. 5 mit VI gekennzeichneten Bereichs des erfindungsgemäßen Bremsdruckerzeugers;
- Fig.7: eine Längsschnittteilansicht eines vierten Ausführungsbeispiels des erfindungsgemäßen Bremsdruckerzeugers und
- Fig.8: eine vergrößerte Darstellung des in Fig. 7 mit VIII gekennzeichneten Bereichs des erfindungsgemäßen Bremsdruckerzeugers.

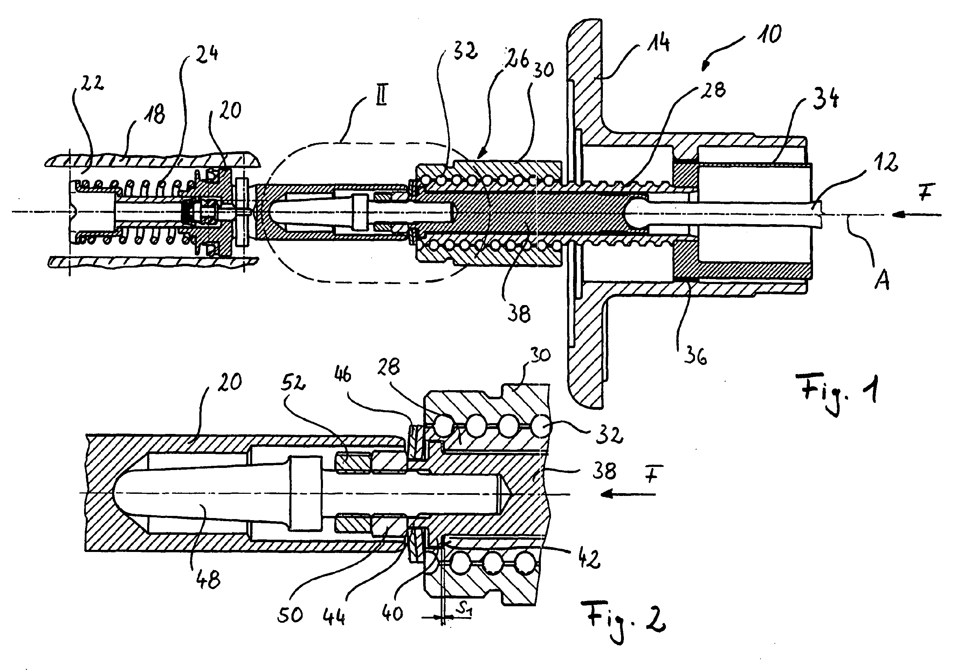

In Fig.1 ist ein in Längsschnittteilansicht gezeigter erfindungsgemäßer Bremsdruckerzeuger allgemein mit 10 bezeichnet. Dieser umfasst ein Krafteingangsglied 12, das mit einem nicht gezeigten Bremspedal gekoppelt ist. Das Krafteingangsglied 12 ist mit seinem in Fig.1 linken Ende in ein nur teilweise gezeigtes Gehäuse 14 eingeführt. Für eine staubdichte Verbindung zwischen dem Gehäuse 14 und dem Krafteingangsglied 12 sorgt ein nicht gezeigter Gummibalg. An dem von dem Krafteingangsglied 12 entfernten Ende des Gehäuses 14 ist ein nur schematisch angedeuteter Hauptbremszylinder 18 ausgebildet, in dem ein Druckkolben 20 aufgenommen ist. Der Druckkolben 20 schließt mit dem Hauptbremszylinder 18 des Gehäuses 14 eine Druckkammer 22 ein, in der ein hydraulisches Bremsfluid aufgenommen ist. In der Druckkammer 22 ist ferner eine Federanordnung 24 aufgenommen, die den Druckkolben 20 in eine Ausgangsstellung vorspannt.

Zwischen dem Druckkolben 20 und dem Krafteingangsglied 12 ist in dem Gehäuse 14 ein Kugelgewindetrieb 26 aufgenommen. Dieser umfasst eine Gewindespindel 28 und eine Gewindemutter 30. Die Gewindespindel 28 ist mit einer axialen Durchgangsbohrung ausgebildet, in die das in Fig.1 linke Ende des Krafteingangsglieds 12 eingeführt ist. In der Durchgangsbohrung ist ein Übertragungskolben 38 axial verschiebbar aufgenommen und gelagert, der an seinem in Fig. 1 rechten Ende das in Fig. 1 linke Ende des Krafteingangsglieds 12 zur Kraftübertragung einer auf das Krafteingangsglied 12 einwirkenden Eingangskraft F aufnimmt.

Die Gewindemutter 30 ist in dem Gehäuse 14 drehbar, jedoch gesichert gegen eine Verlagerung entlang der Achse A gelagert. Die Gewindemutter 30 ist über einen nicht gezeigten motorischen Antrieb dehantreibbar. Zwischen der Gewindespindel 28 und der Spindelmutter 30 ist in an sich bekannter Weise in einem Käfig eine Vielzahl von Wälzkörpern 32 angeordnet.

Wendet man sich dem in Fig.1 rechten Ende der Gewindespindel 28 zu, so erkennt man, dass diese mit einer Führungshülse 34 gekoppelt ist, wobei die Führungshülse 34 fest auf dem rechten Ende der Gewindespindel 28 sitzt. Die Führungshülse 34 ist in einem aus einem reibungsmindernden Kunststoffmaterial, nämlich aus Polytetrafluorethylen, hergestellten Führungsring 36 aufgenommen, der in dem Gehäuse 14 durch lokale Bördelverbindungen gehalten wird. Die Führungshülse 34 und der Führungsring 36 sind derart geformt, dass sich die Führungshülse 34 und der Führungsring 36 nicht relativ zueinander um die Achse A verdrehen lassen.

Wendet man sich dem in Fig. 1 und Fig. 2 gezeigten linken Ende der Gewindespindel 28 zu, so erkennt man, dass das linke Ende des Übertragungskolbens 38 aus der Gewindespindel 28 hervorragt. Der Übertragungskolben 38 umfasst einen integral an diesem angeformten Anschlagring 40, der einer korrespondierenden Anschlagschulter 42 gegenüberliegt. Zwischen dem Anschlagring 40 und der Anschlagschulter 42 der Gewindespindel 28 ist in der in Figuren 1 und 2 gezeigten Ausgangsstellung ein Kopplungsspiel s₁ vorgesehen. Ferner ist an dem linken Ende des Übertragungskolbens 38 eine Durchmesserstufe 44 vorgesehen, auf der ein Tellerfederpaket 46 angeordnet ist. Zwischen dem Übertragungskolben 38 und dem Druckkolben 20 ist ein Zwischenglied 48 angeordnet. Das Zwischenglied 48 ist mit einem Außengewindeabschnitt versehen, auf dem zwei Kontermuttern 50 und 52 fixiert sind. Die in Fig. 2 rechte Kontermutter 50 liegt an der Stirnfläche des linken Endes des Übertragungskolbens 38 an. Das Zwischenglied 48 ist mit einem Endabschnitt in dem Übertragungskolben 38 aufgenommen.

Das Tellerfederpaket 46 stützt sich zum einen an der Kontermutter 50 und zum anderen an der Stirnfläche des linken Endes der Gewindespindel 28 ab. Dadurch ist die Gewindespindel 28 relativ zu dem Druckkolben 20 nur gegen die Federkraft des Tellerfederpakets 46 innerhalb des Kopplungsspiels 38 verlagerbar.

Im Betrieb wird eine Bremspedalbetätigung sensorisch, beispielsweise durch einen im Bereich des Krafteingangsglieds 12 angeordneten Kraftsensor, erfasst. Ferner wird die auf das Krafteingangsglied 12 ausgeübte Pedalbetätigungskraft F unmittelbar auf den Druckkolben 20 übertragen. Nach Maßgabe der erfassten Bremspedalbetätigung wird der nicht gezeigte Elektromotor angesteuert, der die Gewindemutter 30 in eine Drehbewegung versetzt. In der Folge verlagert sich die verdrehgesichert geführte Gewindespindel 28 in Fig. 1 nach links. Allerdings kommt es nicht zu einer sofortigen direkten Kopplung von Gewindespindel 28 und Druckkolben 20. Vielmehr wird zunächst das Tellerfederpaket 46 unter der Bewegung der Gewindespindel 28 deformiert, bis das Kopplungsspiel s₁ aufgebraucht ist. Sobald das Kopplungsspiel s₁ aufgebraucht ist, liegt die Gewindespindel 28 mit ihrer Anschlagschulter 42 an dem Anschlagring 40 kraftübertragend an, so dass jede weitere Bewegung der Gewindespindel 28 in Figuren 1 und 2 nach links direkt auf den Druckkolben 20 übertragen wird. Dadurch wird in der Druckkammer 22 - ausgelöst durch die auf das Krafteingangsglied ausgeübte Kraft F und unterstützt durch den motorisch angetriebenen Kugelgewindetrieb 26 - ein hydraulischer Bremsdruck aufgebaut.

Wird das Bremspedal vom Fahrer wieder freigegeben, so wird der Motor deaktiviert. In der Folge kann unter der Wirkung einer nicht gezeigten Rückstellfeder die gesamte Anordnung in ihre in Fig. 1 gezeigte Stellung zurückkehren, wobei der Bremsdruck in der Druckkammer 22 wieder abgebaut wird.

Durch die erfindungsgemäße Anordnung kann vermieden werden, dass bei einer Aktivierung des nicht gezeigten Elektromotors nach dem Aufbrauchen eines systeminhärenten Spiels die Gewindespindel 28 abrupt bzw. stoßartig den Druckkolben 20 verlagert und dadurch eine für den Fahrer ungewohnte abrupte Bremswirkung auslöst sowie verschleißfördernde Stöße auf den Kugelgewindetrieb 26 ausübt.

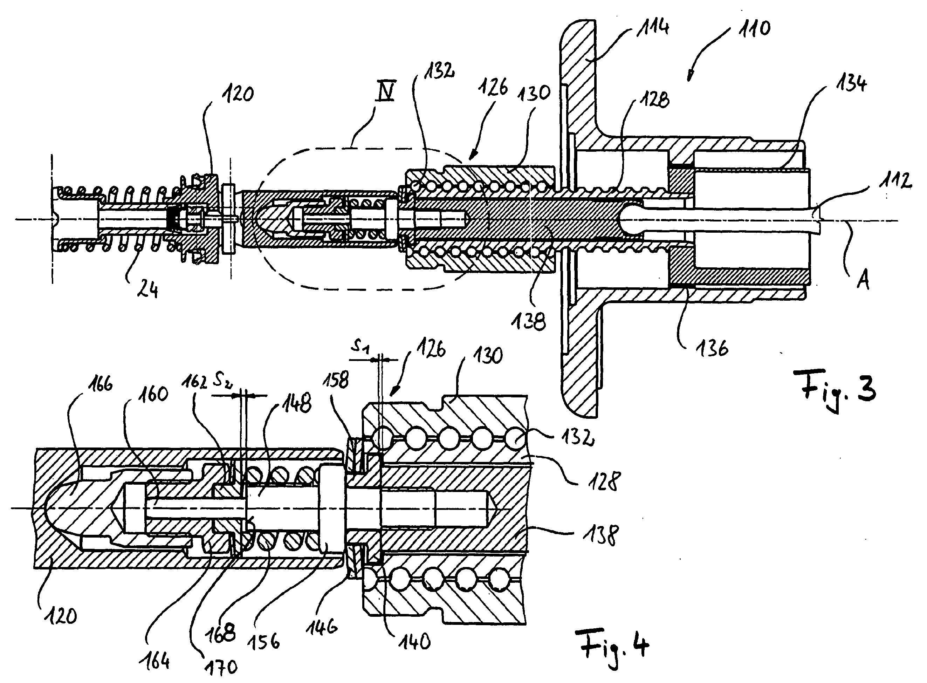

In den Figuren 3 und 4 ist ein zweites Ausführungsbeispiel des erfindungsgemäßen Bremskrafterzeugers dargestellt. Zur Vermeidung von Wiederholungen werden lediglich die Unterschiede zu dem ersten Ausführungsbeispiel gemäß Figuren 1 und 2 beschrieben. Dabei werden für gleichartige oder gleichwirkende Komponenten dieselben Bezugszeichen verwendet, jedoch mit der Ziffer "1" vorangestellt.

Das zweite Ausführungsbeispiel gemäß Figuren 3 und 4 unterscheidet sich vom ersten Ausführungsbeispiel gemäß Figuren 1 und 2 durch die Verbindung zwischen dem Übertragungskolben 138 und dem Druckkolben 120.

Das Zwischenglied 148 ist an seinem in Fig. 4 rechten Ende mit einem Gewindeabschnitt versehen und mit diesem in ein Innengewinde am linken Ende des Übertragungskolbens 138 eingeschraubt. Das Zwischenglied 148 weist einen integral ausgebildeten Spannring 156 auf, mit dem es eine mit dem Anschlagring 140 ausgebildete Anschlaghülse 158 gegen das linke Ende des Übertragungskolbens 138 spannt. Auf der Anschlaghülse 158 sitzt das Tellerfederpaket 146, das sich links an dem Spannring 156 und rechts an der Gewindespindel 128 abstützt. Das Zwischenglied 148 ist an seinem linken Ende mit einem Führungszapfen 160 ausgebildet, auf dem eine Kopplungshülse 162, ein diese aufnehmendes Zwischenelement 164 und ein mit dem Zwischenelement 164 verschraubtes Übertragungsglied 166 geführt ist.

Zwischen dem Spannring 156 und der Anschlaghülse 158 ist eine Druckfeder 168 angeordnet, die die Einheit aus Kopplungshülse 162, Zwischenelement 164 und Übertragungsglied 166 in der in Fig. 3 und 4 gezeigten Ausgangsstellung derart relativ zu dem Zwischenglied 148 vorspannt, dass sich Pufferspiel s₂ einstellt.

Dieses Pufferspiel s₂ hat die Wirkung, dass in einem Fall, in dem das Bremspedal mit hoher Geschwindigkeit niedergedrückt wird und sich demzufolge das Krafteingangsglied 112 mit hoher Geschwindigkeit in Fig. 3 nach links verlagert, zunächst unter Deformation der Druckfeder 168 das Zwischenglied 148 weiter in die Einheit aus Kopplungshülse 162, Zwischenelement 164 und Übertragungsglied 166 eintaucht, bis schließlich das Pufferspiel s₂ aufgebraucht ist und das Zwischenglied 148 mit seiner Anschlagschulter 170 in direkte kraftübertragende Anlage mit der Kopplungshülse 162 gelangt. Der Zeitraum, in dem das Pufferspiel s₂ aufgebraucht wird, reicht als Reaktionszeit aus, um den nicht gezeigten Motor anzusteuern und um die Gewindespindel 128 des Kugelgewindetriebs 126 zu verlagern. Somit kann gewährleistet werden, dass auch bei einer Betätigung des Bremspedals mit hoher Geschwindigkeit eine Bremskrafterzeugung über den Kugelgewindetrieb 126 erfolgt und der Fahrer bei der Bremspedalbetätigung keinen ungewohnt hohen Widerstand spürt.

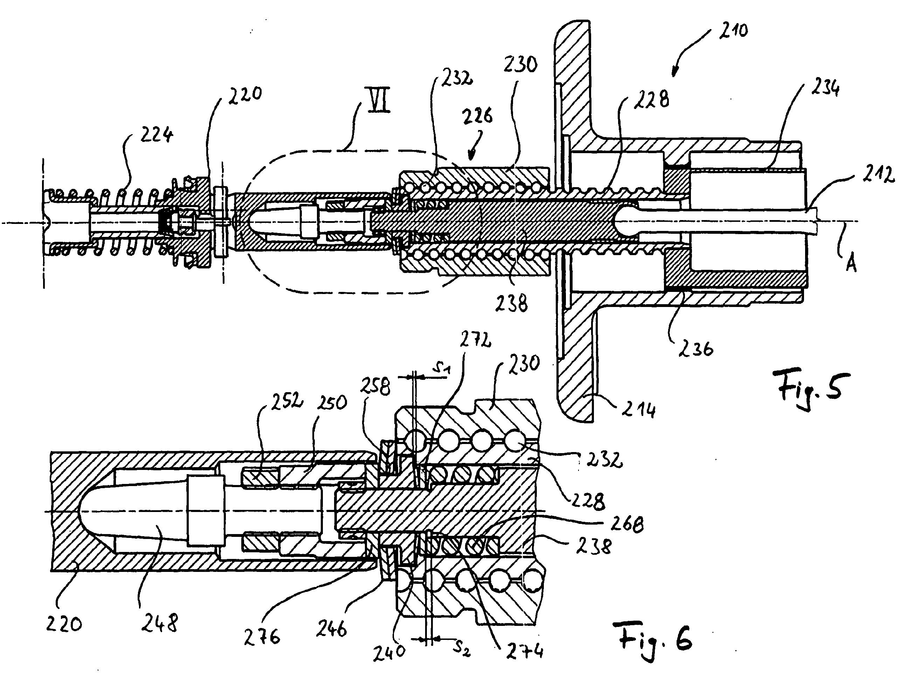

In den Figuren 5 und 6 ist ein drittes Ausführungsbeispiel des erfindungsgemäßen Bremskrafterzeugers dargestellt. Zur Vermeidung von Wiederholungen werden lediglich die Unterschiede zu dem ersten und zweiten Ausführungsbeispiel gemäß Figuren 1 bis 4 beschrieben. Dabei werden für gleichartige oder gleichwirkende Komponenten dieselben Bezugszeichen verwendet, jedoch mit der Ziffer "2" vorangestellt.

Das dritte Ausführungsbeispiel gemäß Figuren 5 und 6 unterscheidet sich von dem zweiten Ausführungsbeispiel gemäß Figuren 3 und 4 im Wesentlichen dadurch, dass die Druckfeder 268 und die Anordnung zur Bereitstellung des Pufferspiels s₂ innerhalb der Gewindespindel 228 angeordnet ist.

Das Pufferspiel s₂ ist hierzu zwischen einer Anlagescheibe 272 und einer Durchmesserstufe 274 vorgesehen. Nach Überwindung des Pufferspiels s₂ erfolgt die weitere Kraftübertragung über die Anschlaghülse 258, eine Zwischenscheibe 276 die Kontermuttern 250 und 252 und das Zwischenglied 248 auf den Druckkolben 220.

Diese dritte Ausführungsform hat den Vorteil, dass sie kompakter gestaltet werden kann als die in Fig. 3 und 4 gezeigte zweite Ausführungsform.

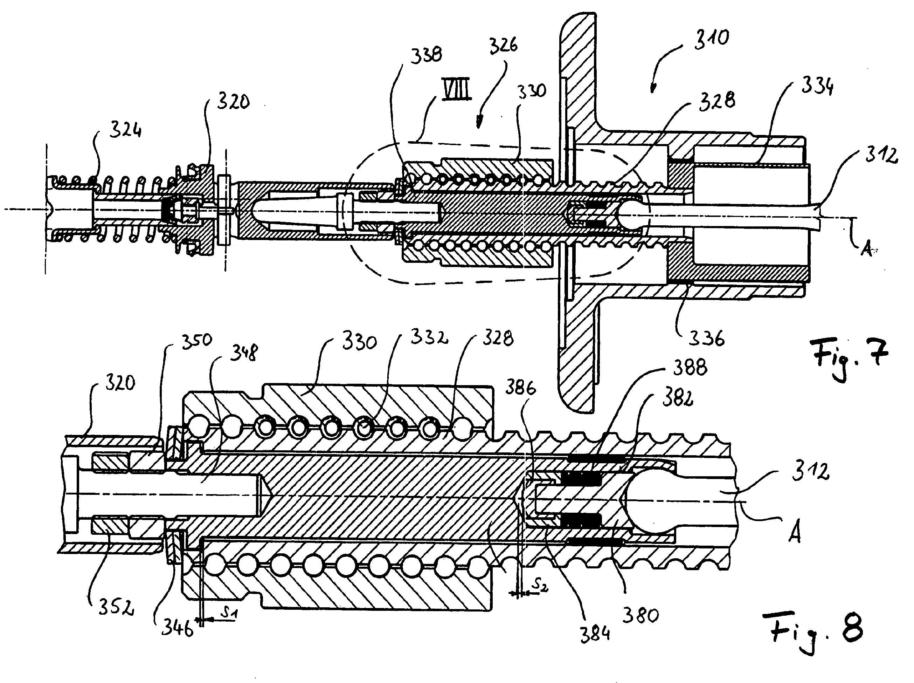

In den Figuren 7 und 8 ist ein viertes Ausführungsbeispiel des erfindungsgemäßen Bremskrafterzeugers dargestellt. Zur Vermeidung von Wiederholungen werden lediglich die Unterschiede zu dem ersten, zweiten und dritten Ausführungsbeispiel gemäß Figuren 1 bis 6 beschrieben. Dabei werden für gleichartige oder gleichwirkende Komponenten dieselben Bezugszeichen verwendet, jedoch mit der Ziffer "3" vorangestellt.

Das vierte Ausführungsbeispiel gemäß Figuren 7 und 8 unterscheidet sich von dem zweiten Ausführungsbeispiel gemäß Figuren 3 und 4 im Wesentlichen dadurch, dass die Anordnung zur Bereitstellung des Kopplungsspiels s₁ analog zu dem ersten Ausführungsbeispiel gemäß Figur 1 und 2 ausgebildet ist und dass die Anordnung zur Bereitstellung des Pufferspiels s₂ zwischen dem Krafteingangsglied 312 und dem Übertragungskolben 338 angeordnet ist.

Zu der Anordnung zur Bereitstellung des Pufferspiels s₂ ist im Einzelnen auszuführen, dass das Krafteingangsglied 312 mit einem Stössel 380 zusammenwirkt, der in einer in dem Übertragungskolben 338 ausgebildeten Axialbohrung 382 aufgenommen und entlang der Achse A verlagerbar ist. Am Boden der Axialbohrung 382 liegt eine Stützhülse 384, in der ein mit dem Stössel 380 gekoppeltes Druckelement 386 verlagerbar geführt ist. Zwischen der Stützhülse 384 und dem Stössel 380 liegt ein Tellerfederpaket 388. Dieses Tellerfederpaket 388 ist bei einer Bremspedalbetätigung mit hoher Geschwindigkeit unter Überwindung des Pufferspiels s₂ komprimierbar. Dadurch wird der vorstehend bezüglich des Pufferspiels s₂ beschriebene Effekt der Bereitstellung einer ausreichenden Reaktionszeit zur Aktivierung der Bremskraftunterstützung erreicht.

## Patentansprüche

1. Elektromechanischer Bremsdruckerzeuger (10; 110; 210; 310) für eine Kraftfahrzeugbremsanlage mit
- einem Krafteingangsglied (12; 112; 212; 312), das mit einem Bremspedal gekoppelt ist,
- einem Gehäuse (14; 114; 214; 314) und einem in dem Gehäuse (14; 114; 214; 314) verlagerbaren Druckkolben (20; 120; 220; 320), wobei der Druckkolben (20; 120; 220; 320) mit dem Gehäuse (14; 114; 214; 314) eine Druckkammer (22) zur Erzeugung eines hydraulischen Bremsdrucks einschließt, und
- einer Gewindespindel-Gewindemutter-Anordnung (26; 126; 226; 326), deren eine Komponente (28; 128; 228; 328) zur Verlagerung des Druckkolbens (20; 120; 220; 320) relativ zu dem Gehäuse (14; 114; 214; 314) verlagerbar ist und deren andere Komponente (30; 130; 230; 330) in dem Gehäuse (14; 114; 214; 314) drehantreibbar ist,
wobei die mit dem Druckkolben (20; 120; 220; 320) zusammenwirkende Komponente (28; 128; 228; 328) der Gewindespindel-Gewindemutter-Anordnung (26; 126; 226; 326) zur Verlagerung des Druckkolbens (20; 120; 220; 320) nach Maßgabe einer Verlagerung des Krafteingangsglieds (12; 112; 212; 312) durch Drehantreiben der drehantreibbaren Komponente (30; 130; 230; 330) der Gewindespindel-Gewindemutter-Anordnung (26; 126; 226; 326) zur Erzeugung eines hydraulischen Bremsdrucks in der Druckkammer (22) verlagerbar ist,
**dadurch gekennzeichnet, dass** die mit dem Druckkolben (20; 120; 220; 320) zusammenwirkende Komponente (28; 128; 228; 328) der Gewindespindel-Gewindemutter-Anordnung (26; 126; 226; 326) und der Druckkolben (20; 120; 220; 320) erst nach Überwindung eines Kopplungsspiels (s₁) gegen die Wirkung einer Federkraft direkt miteinander kraftübertragend koppelbar sind.

2. Elektromechanischer Bremsdruckerzeuger (10; 110; 210; 310) nach Anspruch 1,
**dadurch gekennzeichnet, dass** zwischen der mit dem Druckkolben (20; 120; 220; 320) zusammenwirkenden Komponente (28; 128; 228; 328) der Gewindespindel-Gewindemutter-Anordnung (26; 126; 226; 326) und dem Druckkolben (20; 120; 220; 320) eine Federanordnung (46; 146; 246; 346) vorgesehen ist, wobei das Kopplungsspiel (s₁) gegen die Federkraft der Federanordnung (46; 146; 246; 346) überwindbar ist.

3. Elektromechanischer Bremsdruckerzeuger (10; 110; 210; 310) nach Anspruch 2,
**dadurch gekennzeichnet, dass** die Federanordnung ein Tellerfederpaket (46; 146; 246; 346) umfasst.

4. Elektromechanischer Bremsdruckerzeuger (10) nach einem der vorangehenden Ansprüche,
**dadurch gekennzeichnet, dass** die mit dem Druckkolben (20) zusammenwirkende Komponente (28) der Gewindespindel-Gewindemutter-Anordnung (26) mit einer Anschlagschulter (42) ausgebildet ist, die nach Überwindung des Kopplungspiels (s₁) in kraftübertragende Anlage mit dem Druckkolben (20) oder einem mit dem Druckkolben (20) kraftübertragend gekoppelten Bauelement (38) tritt.

5. Elektromechanischer Bremsdruckerzeuger (10) nach einem der vorangehenden Ansprüche,
**dadurch gekennzeichnet, dass** die mit dem Druckkolben (20) zusammenwirkende Komponente (28) der Gewindespindel-Gewindemutter-Anordnung (26) von der Gewindespindel (28) gebildet ist.

6. Elektromechanischer Bremsdruckerzeuger (10) nach einem der vorangehenden Ansprüche,
**dadurch gekennzeichnet, dass** das Krafteingangsglied (12) zur Verlagerung des Druckkolbens (20) mit diesem gekoppelt oder koppelbar ist.

7. Elektromechanischer Bremsdruckerzeuger (110; 210; 310) nach einem der vorangehenden Ansprüche,
**dadurch gekennzeichnet, dass** in der Übertragungsstrecke zwischen Krafteingangsglied (112; 212; 312) und Druckkolben (120; 220; 320) ein Pufferspiel (S₂) vorgesehen ist, wobei das Krafteingangsglied (112; 212; 312) und der Druckkolben (120; 220; 320) erst nach Überwindung eines Pufferspiels (s₂) miteinander kraftübertragend koppelbar sind.

8. Elektromechanischer Bremsdruckerzeuger (110; 210; 310) nach Anspruch 7,
**dadurch gekennzeichnet, dass** dem Pufferspiel (s₂) eine Pufferfederanordnung (168; 268; 388) zugeordnet ist, wobei das Pufferspiel (s₂) gegen die Federkraft der Pufferfederanordnung (168; 268; 388) überwindbar ist.

9. Elektromechanischer Bremsdruckerzeuger (10; 110; 210; 310) nach einem der vorangehenden Ansprüche,
**dadurch gekennzeichnet, dass** das Krafteingangsglied (12; 112; 212; 312) und der Druckkolben (20; 120; 220; 320) über einen Übertragungskolben (38; 138; 238; 338) miteinander koppelbar sind.

10. Elektromechanischer Bremsdruckerzeuger (310) nach Anspruch 8 und 9,
**dadurch gekennzeichnet, dass** das Pufferspiel (s₂) und die Pufferfederanordnung (388) zwischen dem Krafteingangsglied (312) und dem Übertragungskolben (338) angeordnet ist.

11. Elektromechanischer Bremsdruckerzeuger (110,210) nach Anspruch 8 und 9,
**dadurch gekennzeichnet, dass** das Pufferspiel (S₂) und die Pufferfederanordnung (168; 268) zwischen dem Übertragungskolben (138; 238) und dem Druckkolben (120; 220) angeordnet ist.

12. Elektromechanischer Bremsdruckerzeuger (10: 110; 210; 310) nach einem der vorangehenden Ansprüche,
**dadurch gekennzeichnet, dass** die mit dem Druckkolben (20; 120; 220; 320) zusammenwirkende Komponente (28; 128; 228; 328) der Gewindespindel-Gewindemutter-Anordnung (26; 126; 226; 326) verdrehgesichert relativ zu dem Gehäuse (14; 114; 214; 314) geführt ist und dass zur Ausbildung der Verdrehsicherung ein Bereich der mit dem Druckkolben (20; 120; 220; 320) zusammenwirkenden Komponente (28: 128; 228; 328) der Gewindespindel-Gewindemutter-Anordnung (26; 126; 226; 326) mit einem zylindrischen Führungsprofil versehen ist, das mit einem relativ zu dem Gehäuse (14; 114; 214; 314) festgelegten Komplementärprofil zusammenwirkt, wobei die Grundfläche des Führungsprofils derartige Form besitzt, dass sich die mit dem Druckkolben zusammenwirkende Komponente der Gewindespindel-Gewindemutter-Anordnung (26; 126; 226; 326) bei über den Umfang des zylindrischen Führungsprofils gleichmäßig verteilter Übertragung von Stützkräften an dem Komplementärprofil abstützt.

13. Elektromechanischer Bremsdruckerzeuger (10: 110; 210; 310) nach Anspruch 12,
**dadurch gekennzeichnet, dass** das Führungsprofil eine polygonale Grundfläche aufweist.

14. Kraftfiahrzeugbremsanlage mit einem elektromechanischen Bremsdruckerzeuger (10; 110; 210; 310) nach einem der vorangehenden Ansprüche.

## Claims

1. Electromechanical brake pressure generator (10; 110; 210; 310) for a motor vehicle brake system, comprising
- a force input member (12; 112; 212; 312), which is coupled to a brake pedal;
- a housing (14; 114; 214; 314) and a pressure piston (20; 120; 220; 320) which can be displaced in the housing (14; 114; 214; 314), the pressure piston (20; 120; 220; 320) enclosing, with the housing (14; 114; 214; 314), a pressure chamber (22) for generating a hydraulic brake pressure, and
- a threaded spindle-threaded nut arrangement (26; 126; 226; 326), one component (28; 128; 228; 328) of which can be displaced in order to displace the pressure piston (20; 120; 220; 320) relative to the housing (14; 114; 214; 314), and the other component (30; 130; 230; 330) of which can be rotatably driven in the housing (14; 114; 214; 314),
wherein the component (28; 128; 228; 328) of the threaded spindle-threaded nut arrangement (26; 126; 226; 326) which
co-operates with the pressure piston (20; 120; 220; 320) can be displaced in order to displace the pressure piston (20; 120; 220; 320) according to a displacement of the force input member (12; 112; 212; 312) by rotatably driving the rotatably drivable component (30; 130; 230; 330) of the threaded spindle-threaded nut arrangement (26; 126; 226; 326) in order to generate a hydraulic brake pressure in the pressure chamber (22),
**characterised in that** the component (28; 128; 228; 328) of the threaded spindle-threaded nut arrangement (26; 126; 226; 326) which co-operates with the pressure piston (20; 120; 220; 320) and the pressure piston (20; 120; 220; 320) can only be directly workingly coupled together after overcoming a coupling clearance (s₁) against the action of a spring force.

2. Electromechanical brake pressure generator (10; 110; 210; 310) according to Claim 1,
**characterised in that** a spring arrangement (46; 146; 246; 346) is provided between the component (28; 128; 228; 328) of the threaded spindle-threaded nut arrangement (26; 126; 226; 326) which co-operates with the pressure piston (20; 120; 220; 320) and the pressure piston (20; 120; 220; 320), wherein the coupling clearance (s₁) can be overcome against the spring force of the spring arrangement (46; 146; 246; 346).

3. Electromechanical brake pressure generator (10; 110; 210; 310) according to Claim 2,
**characterised in that** the spring arrangement comprises a Belleville spring assembly (46; 146; 246; 346).

4. Electromechanical brake pressure generator (10) according to any one of the preceding Claims,
**characterised in that** the component (28) of the threaded spindle-threaded nut arrangement (26) which co-operates with the pressure piston (20) is formed with an impact shoulder (42) which, after overcoming the coupling clearance (s₁), comes into working contact with the pressure piston (20) or a construction element (38) workingly coupled to the pressure piston (20).

5. Electromechanical brake pressure generator (10) according to any one of the preceding Claims,
**characterised in that** the component (28) of the threaded spindle-threaded nut arrangement (26) co-operating with the pressure piston (20) is constituted by the threaded spindle (28).

6. Electromechanical brake pressure generator (10) according to any one of the preceding Claims,
**characterised in that** the force input member (12) is or can be coupled to the pressure piston (20) in order to displace this.

7. Electromechanical brake pressure generator (110; 210; 310) according to any one of the preceding Claims,
**characterised in that** a buffer clearance (S₂) is provided in the transmission path between the force input member (112; 212; 312) and the pressure piston (120; 220; 320), wherein the force input member (112; 212; 312) and the pressure piston (120; 220; 320) can only be workingly coupled together after overcoming a buffer clearance (S₂).

8. Electromechanical brake pressure generator (110; 210; 310) according to Claim 7,
**characterised in that** a buffer spring arrangement (168; 268; 388) is associated with the buffer clearance (s₂), wherein the buffer clearance (s₂) can be overcome against the spring force of the buffer spring arrangement (168; 268; 388).

9. Electromechanical brake pressure generator (10; 110; 210; 310) according to any one of the preceding Claims,
**characterised in that** the force input member (12; 112; 212; 312) and the pressure piston (20; 120; 220; 320) can be coupled together via a transmission piston (38; 138; 238; 338).

10. Electromechanical brake pressure generator (310) according to Claims 8 and 9,
**characterised in that** the buffer clearance (S₂) and the buffer spring arrangement (388) are disposed between the force input member (312) and the transmission piston (338).

11. Electromechanical brake pressure generator (110; 210) according to Claims 8 and 9,
**characterised in that** the buffer clearance (s₂) and the buffer spring arrangement (168; 268) are disposed between the transmission piston (138; 238) and the pressure piston (120; 220).

12. Electromechanical brake pressure generator (10; 110; 210; 310) according to any one of the preceding Claims,
**characterised in that** the component (28; 128; 228; 328) of the threaded spindle-threaded nut arrangement (26; 126; 226; 326) which co-operates with the pressure piston (20; 120; 220; 320) is guided so as to be secured against rotation relative to the housing (14; 114; 214; 314), and that, in order to form the anti-rotation mechanism, a region of the component (28; 128; 228; 328) of the threaded spindle-threaded nut arrangement (26; 126; 226; 326) which co-operates with the pressure piston (20; 120; 220; 320) is provided with a cylindrical guide profile which co-operates with a complementary profile that is fixed relative to the housing (14; 114; 214; 314), wherein the base area of the guide profile is of a form which is such that the component of the threaded spindle-threaded nut arrangement (26; 126; 226; 326) which co-operates with the pressure piston is supported at the complementary profile upon support forces being transmitted in a uniform distribution over the circumference of the cylindrical guide profile.

13. Electromechanical brake pressure generator (10; 110; 210; 310) according to Claim 12,
**characterised in that** the guide profile has a polygonal base area.

14. Motor vehicle brake system comprising an electromechanical brake pressure generator (10; 110; 210; 310) according to any one of the preceding Claims.

## Revendications

1. Générateur de pression de freinage électromécanique (10 ; 110 ; 210 ; 310) pour une installation de freinage de véhicule automobile, comprenant
- un organe d'entrée de force (12 ; 112 ; 212 ; 312) qui est accouplé à une pédale de frein ;
- un carter (14 ; 114 ; 214; 314) et un piston de pression (20 ; 120 ; 220 ; 320) qui peut se déplacer dans le carter (14 ; 114 ; 214 ; 314), le piston de pression (20 ; 120 ; 220 ; 320) renfermant avec le carter (14 ; 114 ; 214 ; 314) une chambre de pression (22) pour la production d'une pression de freinage hydraulique et
un ensemble vis-écrou (26 ; 126 ; 226 ; 326) dont un composant (28 ; 128 ; 228 ; 328) peut être déplacé pour déplacer le piston de pression (20 ; 120 ; 220 ; 320) par rapport au carter (14 ; 114 ; 214 ; 314) et dont un autre composant (30 ; 130 ; 230 ; 330) peut être entraîné en rotation dans le carter (14; 114;214;314),
dans lequel le composant (28 ; 128 ; 228 ; 328) de l'ensemble vis-écrou (26 ; 126 ; 226 ; 326) qui coopère avec le piston de pression (20 ; 120 ; 220 ; 320) et qui est destiné à déplacer le piston de pression (20 ; 120 ; 220 ; 320) peut être déplacé, en fonction d'un déplacement de l'organe d'entrée de force (12 ; 112 ; 212 ; 312), par entraînement en rotation du composant (30 ; 130 ; 230 ; 330) de l'ensemble vis-écrou (26 ; 126 ; 226 ; 326) qui peut être entraîné en rotation, pour produire une pression de freinage hydraulique dans la chambre de pression (22),
**caractérisé en ce que** le composant (28 ; 128 ; 228 ; 328) de l'ensemble vis-écrou (26 ; 126 ; 226 ; 326) qui coopère avec le piston de pression (20 ; 120 ; 220 ; 320), et le piston de pression (20 ; 120 ; 220 ; 320) ne peuvent être accouplés directement l'un à l'autre avec transmission de force qu'après qu'un jeu d'accouplement (s₁) a été absorbé à l'encontre de l'action d'une force élastique.

2. Générateur de pression de freinage électromécanique (10 ; 110 ; 210 ; 310) selon la revendication 1,
**caractérisé en ce qu'**il est prévu un dispositif à ressort (46 ; 146 ; 246 ; 346) entre le composant (28 ; 128 ; 228 ; 328) de l'ensemble vis-écrou (26 ; 126 ; 226 ; 326) qui coopère avec le piston de pression (20 ; 120 ; 220; 320) et le piston de pression (20 ; 120 ; 220 ; 320), le jeu d'accouplement (s₁) pouvant être absorbé à l'encontre de la force élastique du dispositif à ressort (46 ; 146 ; 246 ; 346).

3. Générateur de pression de freinage électromécanique (10 ; 110 ; 210 ; 310) selon la revendication 2,
**caractérisé en ce que** le dispositif à ressort comprend un paquet de rondelles Belleville (46 ; 146 ; 246 ; 346).

4. Générateur de pression de freinage électromécanique (10) selon une des revendications précédentes,
**caractérisé en ce que** le composant (28) de l'ensemble vis-écrou (26) qui coopère avec le piston de pression (20) est muni d'un épaulement de butée (42) qui, après l'absorption du jeu d'accouplement (s₁), entre en contact avec transmission de force avec le piston de pression (20) ou avec un élément (38) accouplé au piston de pression (20) avec transmission de force.

5. Générateur de pression de freinage électromécanique (10) selon une des revendications précédentes,
**caractérisé en ce que** le composant (28) de l'ensemble vis-écrou (26) qui coopère avec le piston de pression (20) est formé par la vis (28).

6. Générateur de pression de freinage électromécanique (10) selon une des revendications précédentes,
**caractérisé en ce que** l'organe d'entrée de force (12) destiné à déplacer le piston de pression (20) est accouplé à ce dernier ou peut y être accouplé.

7. Générateur de pression de freinage électromécanique (110 ; 210 ; 310) selon une des revendications précédentes,
**caractérisé en ce qu'**un jeu tampon (s₂) est prévu dans le trajet de transmission entre l'organe d'entrée de force (112 ; 212 ; 312) et le piston de pression (120 ; 220 ; 320), l'organe d'entrée de force (112 ; 212 ; 312) et le piston de pression (120 ; 220 ; 320) ne pouvant être accouplés entre eux pour la transmission de la force qu'après qu'un jeu tampon (s₂) a été absorbé.

8. Générateur de pression de freinage électromécanique (110 ; 210 ; 310) selon la revendication 7,
**caractérisé en ce qu'**au jeu tampon (s₂) est associé un dispositif à ressort tampon (168 ; 268 ; 388), le jeu tampon (s₂) pouvant être absorbé à l'encontre de la force élastique du dispositif à ressort tampon (168 ; 268 ; 388).

9. Générateur de pression de freinage électromécanique (10 ; 110 ; 210 ; 310) selon une des revendications précédentes,
**caractérisé en ce que** l'organe d'entrée de force (12 ; 112 ; 212 ; 312) et le piston de pression (20 ; 120 ; 220 ; 320) peuvent être accouplé entre eux par l'intermédiaire d'un piston de transmission (38 ; 138 ; 238 ; 338).

10. Générateur de pression de freinage électromécanique (310) selon les revendications 8 et 9,
**caractérisé en ce que** le jeu tampon (s₂) et le dispositif à ressort tampon (388) sont disposés entre l'organe d'entrée de force (312) et le piston de transmission (338).

11. Générateur de pression de freinage électromécanique (110 ; 210) selon les revendications 8 et 9,
**caractérisé en ce que** le jeu tampon (s₂) et le dispositif à ressort tampon (168 ; 268) sont disposés entre le piston de transmission (138 ; 238) et le piston de pression (120 ; 220).

12. Générateur de pression de freinage électromécanique (10 ; 110 ; 210 ; 310) selon une des revendications précédentes,
**caractérisé en ce que** le composant (28 ; 128 ; 228 ; 328) de l'ensemble vis-écrou (26 ; 126 ; 226 ; 326) qui coopère avec le piston de pression (20 ; 120 ; 220 ; 320) est guidé dans un état bloqué en rotation par rapport au carter (14 ; 114 ; 214 ; 314) et **en ce que**, pour la réalisation du blocage en rotation, une région du composant (28 ; 128 ; 228 ; 328) de l'ensemble vis-écrou (26 ; 126 ; 226 ; 326) qui coopère avec le piston de pression (20 ; 120 ; 220 ; 320) est munie d'un profil de guidage cylindrique qui coopère avec un profil complémentaire bloqué par rapport au carter (14 ; 114 ; 214 ; 314), la surface de base du profil de guidage possédant une forme telle que le composant de l'ensemble vis-écrou (26 ; 126 ; 226 ; 326) qui coopère avec le piston de pression prenne appui contre le profil complémentaire dans un mode dans lequel les forces d'appui sont répartie régulièrement sur la périphérie du profil de guidage cylindrique.

13. Générateur de pression de freinage électromécanique (10 ; 110 ; 210 ; 310) selon la revendication 12,
**caractérisé en ce que** le profil de guidage présente une surface de base polygonale

14. Installation de freinage de véhicule automobile possédant un générateur de pression de freinage électromécanique (10 ; 110 ; 210 ; 310) selon une des revendications précédentes.
